(19) Europäisches Patentamt
European Patent Office
Office européen des brevets

(11) EP 4 772 570 A1

(12) EUROPEAN PATENT APPLICATION
published in accordance with Art. 153(4) EPC

(43) Date of publication:
**08.07.2026 Bulletin 2026/28**

(21) Application number: **24859680.1**

(22) Date of filing: **26.08.2024**

(51) International Patent Classification (IPC):
***C08L 21/00*** (2006.01) ***B60C 1/00*** (2006.01)
***C08K 3/013*** (2018.01) ***C08K 5/3445*** (2006.01)

(52) Cooperative Patent Classification (CPC):
**B60C 1/00; C08K 3/013; C08K 5/3445;**
**C08L 21/00;** Y02T 10/86

(86) International application number:
**PCT/JP2024/030156**

(87) International publication number:
**WO 2025/047647 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023 JP 2023138065**

(71) Applicants:
- **Otsuka Chemical Co., Ltd.**
  **Osaka-shi, Osaka 540-0021 (JP)**
- **BRIDGESTONE CORPORATION**
  **Chuo-ku**
  **Tokyo 104-8340 (JP)**

(72) Inventors:
- **SHINOZAKI, Shinya**
  **Osaka-shi, Osaka 540-0021 (JP)**
- **UENO, Mifuyu**
  **Osaka-shi, Osaka 540-0021 (JP)**
- **WADA, Yuki**
  **Tokyo 104-8340 (JP)**
- **FUKUSHIMA, Rika**
  **Tokyo 104-8340 (JP)**

(74) Representative: **TBK**
**Bavariaring 4-6**
**80336 München (DE)**

# (54) RUBBER COMPOSITION AND TIRE

(57) The present invention aims to provide a rubber composition having superior tear strength and low heat build-up (high fuel efficiency) in vulcanized rubber. The rubber composition comprises a rubber component and a compound represented by Formula (1) and/or a salt thereof.

EP 4 772 570 A1

## Description

Technical Field

The present invention relates to a rubber composition and a tire.

Background Art

In recent years, with the increasing performance and output of automobiles, tires in contact with road surfaces are required to have high durability. Among aspects of such durability, high mechanical strength, specifically, high tear strength, is demanded, making suitable rubber additives necessary.

PLT 1 and PLT 2 disclose technologies by the present applicant, which can impart low heat build-up and high tear strength to rubber components.

Citation List

Patent Literature

PTL 1: WO2020/045575A1
PTL 2: JP2021-134317A

Summary of Invention

Technical Problem

The present invention aims to provide a rubber composition having superior tear strength and low heat build-up (high fuel efficiency) in vulcanized rubber.

Solution to Problem

The present inventors conducted extensive studies to solve the above problem.

The present inventors found that a specific pyrazolone-based compound can impart superior tear strength and low heat build-up to vulcanized rubber. Such a rubber composition exhibits improved tear strength after vulcanization, and a tire produced using the rubber composition exhibits improved fuel efficiency.

As a result of further study based on the above findings, the present inventors completed the present invention. The present invention encompasses the following rubber composition and tire.

Item 1.

A rubber composition comprising:

a rubber component; and
a compound represented by Formula (1) and/or a salt thereof:

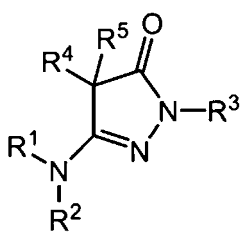

(1)

,

Wherein

$R^1$ and $R^2$ are the same or different, and each represents a hydrogen atom, an alkyl group, an aralkyl group, an aryl

group, or an acyl group; or $R^1$ and $R^2$ together represent an alkylene group or an alkylidene group,
$R^3$ represents a hydrogen atom, an alkyl group, or an aryl group,
$R^4$ and $R^5$ are the same or different, and each represents a hydrogen atom or an alkyl group; or $R^4$ and $R^5$ together represent an alkylene group or an alkylidene group, and
each of these groups may have one or more substituents.

Item 2.

The rubber composition according to Item 1,
wherein, in the compound represented by Formula (1),

$R^1$ and $R^2$ are the same or different, and each represents a hydrogen atom, an alkyl group, an aryl group, or an acyl group; or $R^1$ and $R^2$ together represent an alkylidene group,
$R^3$ represents a hydrogen atom, an alkyl group, or an aryl group, and
$R^4$ and $R^5$ are the same or different, and each represents a hydrogen atom or an alkyl group; or $R^4$ and $R^5$ together represent an alkylidene group.

Item 3.

The rubber composition according to Item 1,
wherein, in the compound represented by Formula (1),

$R^1$ and $R^2$ are the same or different, and each represents a hydrogen atom, an alkyl group, or an aryl group; or $R^1$ and $R^2$ together represent an alkylidene group,
$R^3$ represents a hydrogen atom, an alkyl group, or an aryl group, and
$R^4$ and $R^5$ are the same or different, and each represents a hydrogen atom or an alkyl group; or $R^4$ and $R^5$ together represent an alkylidene group.

Item 4.

The rubber composition according to Item 1,
wherein the compound represented by Formula (1) and/or a salt thereof is at least one compound and/or a salt thereof selected from the group consisting of 3-amino-5-pyrazolone, 3-isopropylamino-5-pyrazolone, 3-phenylamino-5-pyrazolone, 3-acetylamino-5-pyrazolone, 3-dodecylideneamino-5-pyrazolone, 3-amino-1-methyl-5-pyrazolone, 3-amino-1-phenyl-5-pyrazolone, 3-amino-4-methyl-5-pyrazolone, 3-amino-4-phenylalkylidene-5-pyrazolone, and salts thereof.

Item 5.

The rubber composition according to Item 1,
wherein the compound represented by Formula (1) and/or a salt thereof is at least one compound and/or a salt thereof selected from the group consisting of 3-amino-5-pyrazolone, 3-isopropylamino-5-pyrazolone, 3-phenylamino-5-pyrazolone, 3-dodecylideneamino-5-pyrazolone, 3-amino-1-methyl-5-pyrazolone, 3-amino-1-phenyl-5-pyrazolone, 3-amino-4-methyl-5-pyrazolone, 3-amino-4-phenylalkylidene-5-pyrazolone, and salts thereof.

Item 6.

The rubber composition according to Item 1,
wherein the compound represented by Formula (1) and/or a salt thereof is at least one compound and/or a salt thereof selected from the group consisting of 3-amino-5-pyrazolone, 3-dodecylideneamino-5-pyrazolone, and salts thereof.

Item 7.

The rubber composition according to Item 1,
wherein the rubber component is at least one rubber component selected from the group consisting of natural rubber, isoprene rubber, styrene-butadiene copolymer rubber, and butadiene rubber.

Item 8.

The rubber composition according to Item 1,
wherein the rubber component is natural rubber.

Item 9.

The rubber composition according to Item 1,
further comprising carbon black and/or an inorganic filler.

Item 10.

The rubber composition according to Item 1 for use in a tire.

Item 11.

A tire produced using the rubber composition according to any one of Items 1 to 10.
By being blended with a combination of the rubber component and the specific pyrazolone-based compound, the rubber composition of the present invention can achieve superior tear strength and low heat build-up in vulcanized rubber. Such a rubber composition exhibits improved tear strength after vulcanization, and a tire produced using the rubber composition exhibits improved fuel efficiency.

Advantageous Effects of Invention

The present invention can provide a rubber composition having superior tear strength and low heat build-up (high fuel efficiency) in vulcanized rubber.

Description of Embodiments

The present invention is described in detail below.
The embodiments of the present invention are described for the purpose of facilitating understanding of the gist of the invention, and are not intended to limit the invention unless otherwise specified.
As used herein, the terms "include," "contain," and variations thereof express concepts that encompass all of "comprise," "consist essentially of," and "consist of."
As used herein, when a numerical range is expressed as "A to B," the expression means A or more and B or less.
As used herein, expressions such as "part(s)" and "%" are generally used.
As used herein, "part(s)" means "part(s) by mass," and "%" means "mass%," unless otherwise mentioned.

[1] Rubber Composition

The rubber composition of the present invention contains a rubber component and a compound represented by Formula (1) and/or a salt thereof:

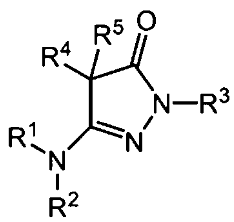

(1)

In the formula, $R^1$ and $R^2$ are the same or different, and each represents a hydrogen atom, an alkyl group, an aralkyl group, an aryl group, or an acyl group; or $R^1$ and $R^2$ together represent an alkylene group or an alkylidene group.
In the formula, $R^3$ represents a hydrogen atom, an alkyl group, or an aryl group.
In the formula, $R^4$ and $R^5$ are the same or different, and each represents a hydrogen atom or an alkyl group; or $R^4$ and $R^5$ together represent an alkylene group or an alkylidene group.
In the formula, each of these groups may have one or more substituents.
The rubber component is preferably at least one rubber component selected from the group consisting of natural

rubber, isoprene rubber, styrene-butadiene copolymer rubber, and butadiene rubber.

The rubber composition of the present invention preferably further contains carbon black and/or an inorganic filler.

By being blended with a combination of the rubber component and the specific pyrazolone-based compound, the rubber composition of the present invention can achieve superior tear strength and low heat build-up in vulcanized rubber. Such a rubber composition exhibits improved tear strength after vulcanization, and a tire produced using the rubber composition exhibits improved fuel efficiency.

[1-1] Rubber Component

The rubber composition of the present invention contains a rubber component.

The rubber component is not particularly limited. Preferred rubber components include natural rubber (NR), synthetic diene rubber, mixtures of natural rubber and synthetic diene rubber, and non-diene rubbers other than the foregoing.

Preferred natural rubber (NR) include natural rubber latex, technically specified rubber (TSR), ribbed smoked sheet (RSS), gutta-percha, *Eucommia* ulmoides-derived natural rubber, guayule-derived natural rubber, and Russian dandelion-derived natural rubber.

The natural rubber (NR) include modified natural rubber obtained by modifying the above-mentioned natural rubber. Preferred modified natural rubbers include epoxidized natural rubber, methacrylic acid-modified natural rubber, and styrene-modified natural rubber.

Preferred synthetic diene rubber include styrene-butadiene copolymer rubber (SBR), butadiene rubber (BR), isoprene rubber (IR), nitrile rubber (NBR), chloroprene rubber (CR), ethylene-propylene-diene terpolymer rubber (EPDM), styreneisoprene-styrene triblock copolymer (SIS), and styrene-butadienestyrene triblock copolymer (SBS).

The synthetic diene rubber includes modified synthetic diene rubber obtained by modifying the above-mentioned synthetic diene rubber. Preferred synthetic diene rubber includes those obtained by a modification method, such as modifying the main chain, one end, or both ends of the rubber. Preferred modified functional groups of the modified synthetic diene rubber include various functional groups, such as epoxy, amino, alkoxysilyl, and hydroxyl groups. The modified synthetic diene rubber may contain one or more of these functional groups.

The synthetic diene rubber can be produced by any method, such as emulsion polymerization, solution polymerization, radical polymerization, anionic polymerization, or cationic polymerization. The glass transition temperature of the synthetic diene rubber is not particularly limited.

The cis/trans/vinyl ratio of the double bond of natural rubber and synthetic diene rubber is not particularly limited, and any ratio is suitable.

The number average molecular weight and the molecular weight distribution of the diene rubber are not particularly limited. The number average molecular weight is preferably about 500 to 3,000,000, and the molecular weight distribution is preferably about 1.5 to 15.

As the rubber component, any of the above rubber components can be used singly, or as a mixture (blend) of two or more.

The rubber component contained in the rubber composition is preferably at least one rubber component selected from the group consisting of the rubber components described above, more preferably at least one rubber component selected from the group consisting of NR, IR, SBR, and BR, and even more preferably at least one rubber component selected from the group consisting of NR, SBR, and BR.

The rubber component contained in the rubber composition is particularly preferably NR. The rubber composition contains NR at an amount of preferably 30 parts by mass or more, more preferably 50 parts by mass or more, and particularly preferably 90 parts by mass or more, per 100 parts by mass of the rubber component.

In the rubber composition, the blend ratio of the rubber component is not particularly limited. As the blend ratio of the rubber component, the amount of NR, SBR, BR, or a mixture of two or more selected therefrom is preferably 50 parts by mass to 100 parts by mass and more preferably 75 parts by mass to 100 parts by mass, per 100 parts by mass of the rubber component.

[1-2] Compound Represented by Formula (1) and/or a Salt Thereof

The rubber composition of the present invention contains a compound represented by Formula (1) and/or a salt thereof:

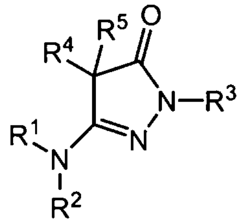

(1)

In the formula, $R^1$ and $R^2$ are the same or different, and each represents a hydrogen atom, an alkyl group, an aralkyl group, an aryl group, or an acyl group; or $R^1$ and $R^2$ together represent an alkylene group or an alkylidene group.

In the formula, $R^3$ represents a hydrogen atom, an alkyl group, or an aryl group.

In the formula, $R^4$ and $R^5$ are the same or different, and each represents a hydrogen atom or an alkyl group; or $R^4$ and $R^5$ together represent and alkylene group or an alkylidene group.

In the formula, each of these groups may have one or more substituents.

The alkyl groups are not particularly limited. Examples include linear, branched, and cyclic alkyl groups. Specific groups of such alkyl groups include linear or branched C1-C4 alkyl groups, such as methyl, ethyl, n-propyl, isopropyl, n-butyl, isobutyl, s-butyl, t-butyl, and 1-ethylpropyl; linear or branched C5-C18 alkyl groups, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl; and cyclic C3-C8 alkyl groups, such as cyclopropyl, cyclobutyl, cyclopentyl, cyclohexyl, cycloheptyl, and cyclooctyl.

The aralkyl groups are not particularly limited. Specific examples of such aralkyl groups include benzyl, phenethyl, trityl, 1-naphthylmethyl, 2-(1-naphthyl)ethyl, and 2-(2-naphthyl)ethyl.

The aryl groups are not particularly limited. Specific examples of such aryl groups include phenyl, biphenyl, naphthyl, dihydroindenyl, and 9H-fluorenyl.

The acyl groups are not particularly limited. Specific examples of such acyl groups include linear or branched C1-C4 alkylcarbonyl groups, such as acetyl, propionyl, and pivaloyl; and arylcarbonyl groups, such as benzoyl and naphthoyl.

The alkylene groups are not particularly limited. The alkylene groups are groups in which $R^1$ and $R^2$, or $R^4$ and $R^5$ together form a ring structure. Specific examples of such alkylene groups include ethylene, trimethylene, tetramethylene, pentamethylene, hexamethylene, and heptamethylene. Each alkylene group may contain a nitrogen atom, an oxygen atom, or a sulfur atom, and may be linked via a phenylene group. Specific examples of such alkylene group include $-CH_2NHCH_2-$, $-CH_2NHCH_2CH_2-$, $-CH_2NHNHCH_2-$, $-CH_2CH_2NHCH_2CH_2-$, $-CH_2NHNHCH_2CH_2-$, $-CH_2NHCH_2NHCH_2-$, $-CH_2CH_2CH_2NHCH_2CH_2CH_2-$, $-CH_2OCH_2CH_2-$, $-CH_2CH_2OCH_2CH_2-$, $-CH_2SCH_2CH_2-$, $-CH_2CH_2SCH_2CH_2-$, and alkylene groups having any of the following structures.

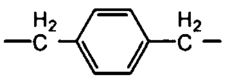 , 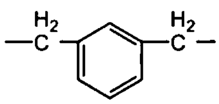 , 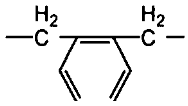 , 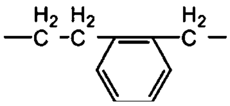

The alkylidene groups are not particularly limited. The alkylidene groups are groups in which $R^1$ and $R^2$, or $R^4$ and $R^5$ together form a double bond. Specific examples of such alkylidene groups include methylidene, ethylidene, propylidene, isopropylidene, butylidene, and 1,3-dimethylpropylidene.

In the formula, each of these alkyl, aralkyl, aryl, acyl, alkylene, and alkylidene groups may have one or more substituents at any substitutable position.

The substituents are not particularly limited. Preferred substituents include halogen atoms and groups such as amino, aminoalkyl, alkoxycarbonyl, acyl, acyloxy, amide, carboxyl, carboxyalkyl, formyl, nitrile, nitro, alkyl, hydroxyalkyl, hydroxyl, alkoxy, aryl, aryloxy, heterocyclic, thiol, alkylthio, and arylthio. The number of such substituents is preferably 1 to 5, and more preferably 1 to 3.

Specific examples of halogen atoms include fluorine, chlorine, bromine, and iodine atoms. Preferred halogen atoms include chlorine, bromine, and iodine.

Specific examples of amino groups include an amino group represented by $-NH_2$ and linear or branched monoalkylamino groups, such as methylamino, ethylamino, n-propylamino, isopropylamino, n-butylamino, isobutylamino, s-butylamino, t-butylamino, 1-ethylpropylamino, n-pentylamino, neopentylamino, n-hexylamino, isohexylamino, and 3-methylpentylamino. Preferred substituted amino groups include substituted amino groups including dialkylamino groups having two linear or branched alkyl groups, such as dimethylamino, ethylmethylamino, and diethylamino.

The aminoalkyl groups not particularly limited. Specific examples of such aminoalkyl groups include aminoalkyl groups, such as aminomethyl, methylaminomethyl, ethylaminomethyl, dimethylaminomethyl, ethylmethylaminomethyl, diethylaminomethyl, 2-aminoethyl, 2-(methylamino)ethyl, 2-(ethylamino)ethyl, 2-(dimethylamino)ethyl, 2-(ethylmethylamino)ethyl, 2-(diethylamino)ethyl, 3-aminopropyl, 3-(methylamino)propyl, 3-(ethylamino)propyl, 3-(dimethylamino)propyl, 3-(ethylmethylamino)propyl, and 3-(diethylamino)propyl; monoalkyl-substituted aminoalkyl groups; and dialkyl-substituted aminoalkyl groups.

The alkoxycarbonyl groups are not particularly limited. Specific examples of such alkoxycarbonyl groups include methoxycarbonyl and ethoxycarbonyl.

The acyl groups are not particularly limited. Specific examples include linear or branched C1-C4 alkylcarbonyl groups, such as acetyl, propionyl, and pivaloyl.

The acyloxy groups are not particularly limited. Specific examples of such acyloxy groups include acetyloxy, propionyloxy, and n-butyryloxy.

The amide groups are not particularly limited. Specific examples of such amide groups include carboxylic acid amide groups, such as acetamide and benzamide; thioamide groups such as thioacetamide and thiobenzamide; N-substituted amide groups such as N-methylacetamide and N-benzylacetamide.

The carboxyalkyl groups are not particularly limited. Specific examples of such carboxyalkyl groups include carboxyalkyl groups, such as carboxymethyl, carboxyethyl, carboxy-n-propyl, carboxy-n-butyl, carboxy-n-pentyl, and carboxy-n-hexyl.

The hydroxyalkyl groups are not particularly limited. Specific examples of such hydroxyalkyl groups include hydroxyalkyl groups, such as hydroxymethyl, hydroxyethyl, hydroxy-n-propyl, and hydroxy-n-butyl.

The alkoxy groups are not particularly limited. Examples include linear, branched, or cyclic alkoxy groups. Specific examples of such alkoxy groups include linear or branched alkoxy groups, such as methoxy, ethoxy, n-propoxy, isopropoxy, n-butoxy, t-butoxy, n-pentyloxy, neopentyloxy, and n-hexyloxy; and cyclic alkoxy groups, such as cyclopropyloxy, cyclobutyloxy, cyclopenthyloxy, cyclohexyloxy, cycloheptyloxy, and cyclooctyloxy.

The aryloxy groups are not particularly limited. Specific examples of such aryloxy groups include phenoxy, biphenyloxy, and naphthoxy.

The "heterocyclic group" as used herein is not particularly limited. Specific examples include 2-pyridyl, 3-pyridyl, 4-pyridyl, 2-pyrazinyl, 2-pyrimidyl, 4-pyrimidyl, 5-pyrimidyl, 3-pyridazyl, 4-pyridazyl, 4-(1,2,3-triazyl), 5-(1,2,3-triazyl), 2-(1,3,5-triazyl), 3-(1,2,4-triazyl), 5-(1,2,4-triazyl), 6-(1,2,4-triazyl), 2-quinolyl, 3-quinolyl, 4-quinolyl, 5-quinolyl, 6-quinolyl, 7-quinolyl, 8-quinolyl, 1-isoquinolyl, 3-isoquinolyl, 4-isoquinolyl, 5-isoquinolyl, 6-isoquinolyl, 7-isoquinolyl, 8-isoquinolyl, 2-quinoxalyl, 3-quinoxalyl, 5-quinoxalyl, 6-quinoxalyl, 7-quinoxalyl, 8-quinoxalyl, 3-cinnolyl, 4-cinnolyl, 5-cinnolyl, 6-cinnolyl, 7-cinnolyl, 8-cinnolyl, 2-quinazolyl, 4-quinazolyl, 5-quinazolyl, 6-quinazolyl, 7-quinazolyl, 8-quinazolyl, 1-phthalazyl, 4-phthalazyl, 5-phthalazyl, 6-phthalazyl, 7-phthalazyl, 8-phthalazyl, 1-tetrahydroquinolyl, 2-tetrahydroquinolyl, 3-tetrahydroquinolyl, 4-tetrahydroquinolyl, 5-tetrahydroquinolyl, 6-tetrahydroquinolyl, 7-tetrahydroquinolyl, 8-tetrahydroquinolyl, 1-pyrrolyl, 2-pyrrolyl, 3-pyrrolyl, 2-furyl, 3-furyl, 2-thienyl, 3-thienyl, 1-imidazolyl, 2-imidazolyl, 4-imidazolyl, 5-imidazolyl, 1-pyrazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, 5-isothiazolyl, 4-(1,2,3-thiadiazolyl), 5-(1,2,3-thiadiazolyl), 3-(1,2,5-thiadiazolyl), 2-(1,3,4-thiadiazolyl), 4-(1,2,3-oxadiazolyl), 5-(1,2,3-oxadiazolyl), 3-(1,2,4-oxadiazolyl), 5-(1,2,4-oxadiazolyl), 3-(1,2,5-oxadiazolyl), 2-(1,3,4-oxadiazolyl), 1-(1,2,3-triazolyl), 4-(1,2,3-triazolyl), 5-(1,2,3-triazolyl), 1-(1,2,4-triazolyl), 3-(1,2,4-triazolyl), 5-(1,2,4-triazolyl), 1-tetrazolyl, 5-tetrazolyl, 1-indolyl, 2-indolyl, 3-indolyl, 4-indolyl, 5-indolyl, 6-indolyl, 7-indolyl, 1-isoindolyl, 2-isoindolyl, 3-isoindolyl, 4-isoindolyl, 5-isoindolyl, 6-isoindolyl, 7-isoindolyl, 1-benzimidazolyl, 2-benzimidazolyl, 4-benzimidazolyl, 5-benzimidazolyl, 6-benzimidazolyl, 7-benzimidazolyl, 2-benzofuranyl, 3-benzofuranyl, 4-benzofuranyl, 5-benzofuranyl, 6-benzofuranyl, 7-benzofuranyl, 1-isobenzofuranyl, 3-isobenzofuranyl, 4-isobenzofuranyl, 5-isobenzofuranyl, 6-isobenzofuranyl, 7-isobenzofuranyl, 2-benzothienyl, 3-benzothienyl, 4-benzothienyl, 5-benzothienyl, 6-benzothienyl, 7-benzothienyl, 2-benzoxazolyl, 4-benzoxazolyl, 5-benzoxazolyl, 6-benzoxazolyl, 7-benzoxazolyl, 2-benzothiazolyl, 4-benzothiazolyl, 5-benzothiazolyl, 6-benzothiazolyl, 7-benzothiazolyl, 1-indazolyl, 3-indazolyl, 4-indazolyl, 5-indazolyl, 6-indazolyl, 7-indazolyl, 2-morpholyl, 3-morpholyl, 4-morpholyl, 1-piperazyl, 2-piperazyl, 1-piperidyl, 2-piperidyl, 3-piperidyl, 4-piperidyl, 2-tetrahydropyranyl, 3-tetrahydropyranyl, 4-tetrahydropyranyl, 2-tetrahydrothiopyranyl, 3-tetrahydrothiopyranyl, 4-tetrahydrothiopyranyl, 1-pyrrolidyl, 2-pyrrolidyl, 3-pyrrolidyl, furanyl, 2-tetrahydrofuranyl, 3-tetrahydrofuranyl, 2-tetrahydrothienyl, 3-tetrahydrothienyl, and 5-methyl-3-oxo-2,3-dihydro-1H-pyrazol-4-yl.

Among the compounds represented by Formula (1) and/or salts thereof, preferred are those in which $R^1$ and $R^2$ are the same or different, and each represents a hydrogen atom, an alkyl group, an aryl group, or an acyl group; or $R^1$ and $R^2$ together represent an alkylidene group.

Among the compounds represented by Formula (1) and/or salts thereof, more preferred are those in which $R^1$ and $R^2$ are both hydrogen atoms.

Among the compounds represented by Formula (1) and/or salts thereof, even more preferred are those in which one of $R^1$ and $R^2$ is a hydrogen atom and the other one of $R^1$ and $R^2$ is an alkyl or aryl group.

Among the compounds represented by Formula (1) and/or salts thereof, even more preferred are those in which $R^1$ and $R^2$ together represent an alkylidene group.

Among the compounds represented by Formula (1) and/or salts thereof, particularly preferred are those in which

$R^1$ and $R^2$ are both hydrogen atoms.

Among the compounds represented by Formula (1) and/or salts thereof, particularly preferred are those in which one of $R^1$ and $R^2$ is a hydrogen atom and the other one of $R^1$ and $R^2$ is a linear or branched C1-C4 alkyl, a phenyl group, or an acetyl group.

Among the compounds represented by Formula (1) and/or salts thereof, particularly preferred are those in which $R^1$ and $R^2$ together represent an alkylidene group.

Among the compounds represented by Formula (1) and/or salts thereof, particularly preferred are those in which $R^3$ represents a hydrogen atom, a linear or branched alkyl group, or an aryl group (a phenyl group or a naphthyl group).

Among the compounds represented by Formula (1) and/or salts thereof, particularly preferred are those in which $R^3$ represents a hydrogen atom, a linear or branched C1-C4 alkyl, or a phenyl group.

Among the compounds represented by Formula (1) and/or salts thereof, preferred are those in which $R^4$ and $R^5$ are the same or different, and each represents a hydrogen atom or an alkyl group; or $R^4$ and $R^5$ together represent an alkylidene group.

Among the compounds represented by Formula (1) and/or salts thereof, more preferred are those in which $R^4$ and $R^5$ are both hydrogen atoms.

Among the compounds represented by Formula (1) and/or salts thereof, more preferred are those in which one of $R^4$ and $R^5$ is a hydrogen atom and the other one of $R^4$ and $R^5$ is an alkyl group.

Among the compounds represented by Formula (1) and/or salts thereof, more preferred are those in which $R^4$ and $R^5$ together represent an alkylidene group.

Among the compounds represented by Formula (1) and/or salts thereof, particularly preferred are those in which $R^4$ and $R^5$ are both hydrogen atoms.

Among the compounds represented by Formula (1) and/or salts thereof, particularly preferred are those in which one of $R^4$ and $R^5$ is a hydrogen atom and the other one of $R^4$ and $R^5$ is a linear or branched C1-C4 alkyl group.

Among the compounds represented by Formula (1) and/or salts thereof, particularly preferred are those in which $R^4$ and $R^5$ together represent an alkylidene group.

Among the compounds represented by Formula (1) and/or salts thereof, preferred are those in which $R^1$ and $R^2$ are the same or different, and each represents a hydrogen atom, an alkyl group, an aryl group, or an acyl group, or $R^1$ and $R^2$ together represent an alkylidene group; $R^3$ represents a hydrogen atom, an alkyl group, or an aryl group; and $R^4$ and $R^5$ are the same or different, and each represents a hydrogen atom or an alkyl group, or $R^4$ and $R^5$ together represent an alkylidene group.

Among the compounds represented by Formula (1) and/or salts thereof, more preferred are those in which $R^1$ and $R^2$ are the same or different, and each represents a hydrogen atom, an alkyl group, or an aryl group, or $R^1$ and $R^2$ together represent an alkylidene group; $R^3$ represents a hydrogen atom, an alkyl group, or an aryl group; and $R^4$ and $R^5$ are the same or different, and each represents a hydrogen atom, alkyl group, or $R^4$ and $R^5$ together represent an alkylidene group.

Among the compounds represented by Formula (1) and/or salts thereof, particularly preferred are those in which $R^1$ and $R^2$ are both hydrogen atoms, one of $R^1$ and $R^2$ is a hydrogen atom and the other one of $R^1$ and $R^2$ is a linear or branched C1-C4 alkyl group or a phenyl group, or $R^1$ and $R^2$ together represent an alkylidene group; $R^3$ represents a hydrogen atom, a linear or branched C1-C4 alkyl group, or a phenyl group; and $R^4$ and $R^5$ are both hydrogen atoms, one of $R^4$ and $R^5$ is a hydrogen atom and the other one of $R^4$ and $R^5$ is a linear or branched C1-C4 alkyl group, or $R^4$ and $R^5$ together represent an alkylidene group.

Specifically, among the compounds represented by Formula (1) and/or salts thereof, preferred are 3-amino-5-pyrazolone, 3-isopropylamino-5-pyrazolone, 3-phenylamino-5-pyrazolone, 3-acetylamino-5-pyrazolone, 3-dodecylideneamino-5-pyrazolone, 3-amino-1-methyl-5-pyrazolone, 3-amino-1-phenyl-5-pyrazolone, 3-amino-4-methyl-5-pyrazolone, and 3-amino-4-phenylalkylidene-5-pyrazolone.

Among the compounds represented by Formula (1) and/or salts thereof, more preferred are 3-amino-5-pyrazolone, 3-isopropylamino-5-pyrazolone, 3-phenylamino-5-pyrazolone, 3-dodecylideneamino-5-pyrazolone, 3-amino-1-methyl-5-pyrazolone, 3-amino-1-phenyl-5-pyrazolone, 3-amino-4-methyl-5-pyrazolone, and 3-amino-4-phenylalkylidene-5-pyrazolone.

Among the compounds represented by Formula (1) and/or salts thereof, even more preferred are 3-amino-5-pyrazolone and 3-dodecylideneamino-5-pyrazolone.

The compound represented by Formula (1) can exist in tautomeric forms. When tautomerization is possible (for example, in solution), chemical equilibrium among the tautomers can be established.

The compound represented by Formula (1) and/or a salt thereof and the tautomers thereof reach an equilibrium state in which both isomers coexist. Unless otherwise specified, the compound represented by Formula (1) and/or a salt thereof encompasses all tautomeric forms.

The compound represented by Formula (1) may be in the form of a salt. The salt of the compound represented by Formula (1) is not particularly limited, and includes all types of salts.

Examples of such salts include inorganic acid salts such as hydrochlorides, sulfates, and nitrates; organic acid salts such as acetates and methanesulfonates; alkali metal salts such as sodium salts and potassium salts; alkaline earth metal salts such as magnesium salts and calcium salts; and ammonium salts such as dimethylammonium salts and triethylammonium salts.
The rubber composition of the present invention contains the compound represented by Formula (1) and/or a salt thereof at an amount of preferably 0.1 parts by mass to 50 parts by mass, more preferably 0.1 parts by mass to 20 parts by mass, even more preferably 0.2 parts by mass to 10 parts by mass, and particularly preferably 0.5 parts by mass to 5 parts by mass, per 100 parts by mass of the rubber component.
By being blended with a combination of the rubber component and the specific pyrazolone-based compound, the rubber composition of the present invention can achieve superior tear strength and low heat build-up in vulcanized rubber. Such a rubber composition exhibits improved tear strength after vulcanization, and a tire produced using the rubber composition exhibits improved fuel efficiency.

[1-3] Carbon Black and/or Inorganic Filler

The rubber composition of the present invention preferably further contains carbon black and/or an inorganic filler.

Carbon black

In the present specification, the inorganic filler does not include carbon black.
The carbon black is used to improve reinforcement of the rubber.
The carbon black is not particularly limited. The carbon black may be, for example, commercially available carbon black, a carbon-silica dual-phase filler, or the like.
Owing to the presence of carbon black in the rubber component, the electrical resistance of the rubber can be lowered to prevent static electricity build-up, and the strength of the rubber can be enhanced.
The carbon black is preferably a high-, middle-, or low-structure SAF, ISAF, IISAF, N110, N134, N220, N234, N330, N339, N375, N550, HAF, FEF, GPF, or SRF-grade carbon black. Preferred carbon black includes SAF, ISAF, IISAF, N134, N234, N330, N339, N375, HAF, and FEF-grade carbon black.
The DBP absorption of the carbon black is preferably from 60 $cm^3$/100 g to 200 $cm^3$/100 g, more preferably from 70 $cm^3$/100 g to 180 $cm^3$/100 g, and particularly preferably from 80 $cm^3$/100 g to 160 $cm^3$/100 g.
The nitrogen adsorption specific surface area (N2SA) of the carbon black is measured in accordance with JISK6217-2:2001. The nitrogen adsorption specific surface area of the carbon black is preferably from 30 $m^2$/g to 200 $m^2$/g, more preferably from 40 $m^2$/g to 180 $m^2$/g, and particularly preferably from 50 $m^2$/g to 160 $m^2$/g.

Inorganic Filler

The inorganic filler is not particularly limited. Any inorganic compound commonly used in the rubber industry may be used.
The inorganic compound is preferably silica.
The inorganic compound is preferably alumina ($Al_2O_3$), such as $\gamma$-alumina or $\alpha$-alumina.
The inorganic compound is preferably an alumina monohydrate ($Al_2O_3 \cdot H_2O$), such as boehmite or diaspore.
The inorganic compound is preferably an aluminum hydroxide [$Al(OH)_3$], such as gibbsite or bayerite.
Preferred inorganic compounds include aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2.9H_2O$), titanium white ($TiO_2$), titanium black ($TiO_{2n-1}$), calcium oxide (CaO), calcium hydroxide [$Ca(OH)_2$], magnesium aluminum oxide ($MgO \cdot Al2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicates ($Al_2SiO_5$, $Al_4 \cdot 3SiO_4 \cdot 5H_2O$, etc.), magnesium silicates ($Mg_2SiO_4$, $MgSiO_3$, etc.), calcium silicates ($Ca_2 \cdot SiO_4$, etc.), aluminum calcium silicates ($Al_2O_3 \cdot CaO \cdot 2SiO_2$, etc.), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], zirconium carbonate [$Zr(CO_3)_2$], zinc acrylate, and zinc methacrylate.
Preferred inorganic compounds include crystalline aluminosilicates containing hydrogen, alkali metal, or alkaline earth metal that compensate charge, such as various types of zeolites.
To enhance affinity to the rubber component, preferably, the surface of the inorganic compound of the inorganic filler may be organically treated.
The inorganic filler is preferably silica from the viewpoint of imparting rubber strength.
The silica is preferably precipitated silica, fumed silica, or colloidal silica, and more preferably precipitated silica.
To enhance affinity to the rubber component, preferably, the surface of the silica may be organically treated.

The BET specific surface area of the silica is measured in accordance with ISO 5794/1. The BET specific surface area of the silica is preferably from 40 $m^2/g$ to 350 $m^2/g$. Silica that has a BET specific surface area within this range is advantageous in that rubber reinforcement and dispersibility in the rubber component can both be achieved. Silica having a BET specific surface area within this range is advantageous in that rubber reinforcement and dispersibility in the rubber component can both be achieved. The BET specific surface area of the silica is more preferably 80 $m^2/g$ to 300 $m^2/g$, even more preferably 100 $m^2/g$ to 270 $m^2/g$, and particularly preferably 110 $m^2/g$ to 270 $m^2/g$.

Examples of commercially available silica include HD165MP (trade name, BET specific surface area: 165 $m^2/g$), HD115MP (trade name, BET specific surface area: 115 $m^2/g$), HD200MP (trade name, BET specific surface area: 200 $m^2/g$), and HD250MP (trade name, BET specific surface area: 250 $m^2/g$), all available from Quechen Silicon Chemical Co., Ltd.; Nipsil AQ (trade name, BET specific surface area: 205 $m^2/g$) and Nipsil KQ (trade name, BET specific surface area: 240 $m^2/g$), both available from Tosoh Silica Corporation; and Ultrasil VN3 (trade name, BET specific surface area: 175 $m^2/g$), available from Degussa AG.

As the carbon black and/or inorganic filler, any of the above carbon black and/or inorganic fillers can be used singly, or as a mixture (blend) of two or more.

Amount of carbon black and/or inorganic filler

The rubber composition of the present invention contains carbon black and/or an inorganic filler at an amount of preferably 20 parts by mass to 200 parts by mass, more preferably 30 parts by mass to 130 parts by mass, and even mover preferably 35 parts by mass to 110 parts by mass, per 100 parts by mass of the rubber component.

The amount of carbon black and/or inorganic filler is preferably 20 parts by mass or more from the viewpoint of improving reinforcement of the rubber composition, and is preferably 200 parts by mass or less from the viewpoint of improving tear strength.

When both the carbon black and the inorganic filler are added, the amounts may be suitably adjusted such that the total amount of these components falls within the above range.

The amount of the carbon black is preferably 2 parts by mass to 200 parts by mass, more preferably 30 parts by mass to 130 parts by mass, and even more preferably 35 parts by mass to 100 parts by mass, per 100 parts by mass of the rubber component.

From the viewpoint of ensuring anti-static performance and rubber strength performance, the amount of carbon black is preferably 2 parts by mass or more. From the viewpoint of improving tear strength, the amount is preferably 200 parts by mass or less.

The amount of inorganic filler is preferably 2 parts by mass to 200 parts by mass, more preferably 30 parts by mass to 130 parts by mass, and even more preferably 35 parts by mass to 100 parts by mass, per 100 parts by mass of the rubber component.

When silica is used as the inorganic filler, the amount of silica is preferably 2 parts by mass to 200 parts by mass, more preferably 30 parts by mass to 130 parts by mass, and even more preferably 35 parts by mass to 100 parts by mass, per 100 parts by mass of the rubber component.

[1-4] Other Additives

The rubber composition of the present invention contains a rubber component, a compound represented by Formula (1) and/or a salt thereof, and if necessary, carbon black and/or an inorganic filler. In addition, additives commonly used in the rubber industry may be suitably selected and added to the rubber composition.

Examples of additives include antioxidants, ozone protectants, softeners, processing aids, waxes, resins, foaming agents, oils, zinc oxide (ZnO), stearic acid, vulcanization accelerators, vulcanization retarders, and vulcanizing agents (e.g., sulfur).

Silane Coupling Agent etc.

When the rubber composition of the present invention contains an inorganic filler, such as carbon black or silica or carbon black, a coupling agent, such as a silane coupling agent, a titanate coupling agent, an aluminate coupling agent, or a zirconate coupling agent, may be added to the rubber composition for the purpose of enhancing reinforcement of the rubber composition by silica or the like, or for the purpose of enhancing tear strength and wear resistance of the rubber composition.

A preferred silane coupling agent is, for example, a sulfide-, polysulfide-, thioester-, thiol-, olefin-, epoxy-, amino-, or alkyl-based silane coupling agent.

A preferred titanate coupling agent is, for example, an alkoxide-, chelate-, or acylate-based titanate coupling agent.

A preferred zirconate coupling agent is, for example, an alkoxide-, chelate-, or acylate-based zirconate coupling agent.

As the silane, titanate, aluminate, or zirconate coupling agent, any of the above silane, titanate, aluminate, or zirconate coupling agents may be used singly, or as a mixture (blend) of two or more.

In the rubber composition of the present invention, the amount of silane, titanate, aluminate, or zirconate is preferably 0.1 parts by mass to 20 parts by mass and more preferably 3 parts by mass to 15 parts by mass per 100 parts by mass of the carbon black and/or inorganic filler. When the amount of silane, titanate, aluminate, or zirconate is 0.1 parts by mass or more per 100 parts by mass of the carbon black and/or inorganic filler, the effect of improving tear strength of the rubber composition can be more suitably achieved. When the amount is 20 parts by mass or less, the cost of the rubber composition can be reduced, thereby improving economic efficiency.

By being blended with a combination of the rubber component and the specific pyrazolone-based compound, the rubber composition of the present invention can achieve superior tear strength and low heat build-up in vulcanized rubber. Such a rubber composition exhibits improved tear strength after vulcanization, and a tire produced using the rubber composition exhibits improved fuel efficiency.

[2] Method for Producing Rubber Composition

The method for producing the rubber composition of the present invention includes:

(1) a step of mixing a rubber component, a compound represented by Formula (1) and/or a salt thereof, and, if necessary, starting materials including carbon black and/or an inorganic filler; and
(2) a step of mixing the mixture obtained in step (1) and a vulcanizing agent (e.g., sulfur).

Step (1)

Step (1) is a step of kneading a rubber component, a compound represented by Formula (1) and/or a salt thereof, and, if necessary, starting materials including carbon black and/or an inorganic filler. It is a step before adding a vulcanizing agent.

The kneading method in step (1) is, for example, a method of kneading a composition containing a rubber component, a compound represented by Formula (1) and/or a salt thereof, and, if necessary, starting materials including carbon black and/or an inorganic filler. In step (1), further, the above-described other additives and the like can be added, if necessary.

In the kneading method, the entire amount of each of the components may be kneaded at once, or the components may be each added in portions according to the intended purpose, such as viscosity adjustment, and then kneaded.

In the kneading method, alternatively, kneading may be performed by first kneading a rubber component and carbon black and/or an inorganic filler, and then feeding a compound represented by Formula (1) and/or a salt thereof; or kneading may be performed by first kneading a rubber component and a compound represented by Formula (1) and/or a salt thereof, and then feeding carbon black and/or an inorganic filler.

In the kneading method, kneading may be repeated to allow the components to be uniformly dispersed.

In step (1), the kneading temperature is set such that the upper temperature limit of the rubber composition is preferably 100°C to 190°C, more preferably 110°C to 175°C, and even more preferably 120°C to 170°C.

In step (1), the kneading time is preferably 10 seconds to 20 minutes, more preferably 30 seconds to 10 minutes, and even more preferably 1 minute to 8 minutes.

Two-stage Kneading in Step (1)

As another kneading method in step (1), a two-stage kneading method may be employed, which includes:

step (1-1) of kneading a rubber component and a compound represented by Formula (1) and/or a salt thereof; and
step (1-2) of kneading the mixture obtained in step (1-1) and starting materials including carbon black and/or an inorganic filler.

In step (1-1), the kneading temperature is preferably 60°C to 190°C, more preferably 70°C to 160°C, and even more preferably 80°C to 150°C. When the kneading temperature is adjusted to 60°C to 190°C, the reaction proceeds smoothly, and deterioration of the rubber can be suppressed.

In step (1-1), the kneading time is preferably 10 seconds to 20 minutes, more preferably 30 seconds to 10 minutes, and even more preferably 60 seconds to 7 minutes. When the kneading time is adjusted to 10 seconds to 20

minutes, the reaction proceeds smoothly, and the productivity can be improved.

In step (1-2), the kneading temperature is set such that the upper temperature limit of the mixture is preferably 100°C to 190°C, more preferably 130°C to 175°C, and even more preferably 110°C to 170°C.

In step (1-2), the kneading time is preferably 10 seconds to 20 minutes, more preferably 30 seconds to 10 minutes, and even more preferably 1 minute to 8 minutes.

In step (1) and step (1-1), the amount of the compound represented by Formula (1) and/or a salt thereof is preferably 0.1 parts by mass to 50 parts by mass, more preferably 0.1 parts by mass to 20 parts by mass, and even more preferably 0.2 parts by mass to 10 parts by mass, per 100 parts by mass of the rubber component.

When proceeding from step (1) to step (2), preferably, the temperature is lowered by 30°C or more from the temperature at the end of step (1) before proceeding to step (2).

Step (2)

Step (2) is a step of mixing the mixture obtained in step (1) and a vulcanizing agent (e.g., sulfur), and is the final stage of kneading.

In step (2), further, if necessary, a vulcanization accelerator and the like may be blended.

Preferably, step (2) is performed under heating. The heating temperature is preferably 60°C to 140°C, more preferably 80°C to 120°C, and even more preferably 90°C to 120°C.

In step (2), the mixing (or kneading) time is preferably 10 seconds to 20 minutes, more preferably 30 seconds to 10 minutes, and even more preferably 60 seconds to 5 minutes.

Addition of Other Additives

In the method for producing the rubber composition of the present invention, in step (1) (step (1-1) and step (1-2)) and step (2), if necessary, various additives, such as stearic acid, zinc oxide, vulcanization accelerators, antioxidants, and the like, that are added to the rubber composition can be added.

The other additives may be added all at once in either step (1) or step (2), or may be added separately in step (1) and step (2).

By being blended with a combination of the rubber component and the specific pyrazolone-based compound, the rubber composition of the present invention can achieve superior tear strength and low heat build-up in vulcanized rubber. Such a rubber composition exhibits improved tear strength after vulcanization, and a tire produced using the rubber composition exhibits improved fuel efficiency.

[3] Tire

The rubber composition of the present invention is preferably used for tires. The present invention encompasses a tire produced using the rubber composition of the present invention.

The rubber composition of the present invention is mixed or kneaded using a Banbury mixer, a roll mill, an intensive mixer, a kneader, a single-screw extruder, a twin-screw extruder, or the like.

Subsequently, the rubber composition is extruded in an extrusion step, and shaped into treads or sidewalls members, for example.

Subsequently, the rubber composition is assembled and shaped on a tire building machine to form a green tire by a usual method.

The green tire is heated and pressurized in a vulcanization machine, whereby a vulcanized tire can be obtained.

Tire and Other Applications

The tire of the present invention is produced using the rubber composition of the present invention.

Preferred tires include pneumatic tires (such as radial-ply tires and bias tires) and solid tires. Preferred tire applications include passenger car tires, heavy-duty tires, and motorcycle tires, studless tires, and large tires for trucks, buses, and the like. A more preferred and suitable tire application is passenger car tires.

The shape, structure, size, and material of the tire of the present invention are not particularly limited, and are appropriately selected according to the purpose.

In the tire of the present invention, preferred members include a tread portion, a sidewall portion, a bead area portion, a belt portion, a carcass portion, and a shoulder portion.

Preferred tire members are a tire tread portion and a sidewall portion.

The tread portion is a portion that has a tread pattern and that comes into direct contact with the road surface. It is a tire casing portion for protecting the carcass and preventing wear and flaws, and refers to a cap tread that constitutes the

grounding part of a tire and/or to a base tread that is disposed inside the cap tread. When the rubber composition of the present invention is used in the tread portion, the tread portion exhibits superior tear strength and low heat build-up, because the rubber composition is blended with a combination of the rubber component and the specific pyrazolone-based compound.

The sidewall portion is a portion extending from the lower side of the shoulder portion to the bead area portion of a pneumatic radial-ply tire. The sidewall portion protects the carcass and is subjected to the greatest bending during driving. When the rubber composition of the present invention is used in the sidewall portion, the sidewall portion exhibits superior tear strength and low heat build-up, because the rubber composition is blended with a combination of the rubber component and the specific pyrazolone-based compound.

The bead area portion is a portion that plays a role in anchoring both ends of the carcass cords and simultaneously holding the tire to the rim. Beads are composed of bundles of high carbon steel. When the rubber composition of the present invention is used in the bead area portion, the bead area portion exhibits superior tear strength and low heat build-up, because the rubber composition is blended with a combination of the rubber component and the specific pyrazolone-based compound.

The belt portion is a reinforcing band disposed between the carcass and the tread of a radial structure in the circumferential direction. The belt portion tightens the carcass in a manner similar to a barrel hoop, thereby enhancing the rigidity of the tread. When the rubber composition of the present invention is used in the belt portion, the belt portion exhibits superior tear strength and low heat build-up, because the rubber composition is blended with a combination of the rubber component and the specific pyrazolone-based compound.

The carcass portion is a cord layer portion that forms the framework of the tire. The carcass portion plays a role in bearing the load, impact, and filled air pressure applied to the tire. When the rubber composition of the present invention is used in the carcass portion, the carcass portion exhibits superior tear strength and low heat build-up, because the rubber composition is blended with a combination of the rubber component and the specific pyrazolone-based compound.

The shoulder portion is located at the shoulder of the tire, and plays a role in protecting the carcass. When the rubber composition of the present invention is used in the shoulder portion, the shoulder portion exhibits superior tear strength and low heat build-up, because the rubber composition is blended with a combination of the rubber component and the specific pyrazolone-based compound.

The tire of the present invention can be produced by any conventionally method in the field of tires. The tire is filled with ordinary air, or air having an adjusted oxygen partial pressure; or an inert gas, such as nitrogen, argon, or helium.

The rubber composition of the present invention can be used not only for tire applications but also, preferably, for various rubber members such as anti-vibration rubber, seismic-isolation rubber, and belts including conveyor belts.

By being blended with a combination of the rubber component and the specific pyrazolone-based compound, the rubber composition of the present invention can achieve superior tear strength and low heat build-up in vulcanized rubber. Such a rubber composition exhibits improved tear strength after vulcanization, and a tire produced using the rubber composition exhibits improved fuel efficiency.

Examples

The present invention is specifically described with reference to Production Examples and Examples. However, the following examples are only illustrative, and are not intended to limit the present invention to these.

[1] Production of Rubber Compositions of Examples and Comparative Examples

Step (1)

The components described in step (1) of Table 1 below were mixed at the respective proportions (parts by mass), and kneaded in a Banbury mixer.

Step (2)

Then, the mixture was aged until the mixture temperature reached 60°C or lower, whereby an unvulcanized rubber composition was produced.

Then, the components described in step (2) of Table 1 were added at the respective proportions (parts by mass) to the unvulcanized rubber composition, and the mixture was kneaded while adjusting the maximum temperature of the mixture to 70°C or lower.

Vulcanization Step

An unvulcanized rubber composition was heated using a vulcanizing press machine at 150°C for 25 minutes vulcanization, whereby a vulcanized rubber composition was obtained.

[2] Evaluation Test

[2-1] Tear test: Tear Strength Measurement of Vulcanized Rubber

The tear strength of the resultant vulcanized rubber composition was measured in accordance with JIS K 6252 using a crescent-shaped test piece at a tensile speed of 500 mm/min at room temperature.
The tear strength index of the vulcanized rubber composition was expressed as an index, taking the tear strength value of Comparative Example 1 (an example containing no compound represented by Formula (1)) as 100, and the tear strength index was calculated based on the following equation.
Examples 1 and 2 are examples containing the compound represented by Formula (1).
A higher tear strength index value indicates better tear strength of the vulcanized rubber composition.

Equation: Tear strength index
= (tear strength of vulcanized rubber composition of Example 1 or 2)
/(tear strength of vulcanized rubber composition of Comparative Example 1) × 100

[2-2] Low Heat Build-up Test: Tan δ Value Measurement

The tan δ values of the vulcanized rubber compositions obtained above were measured using a viscoelasticity measuring device (available from Metravib) at a temperature of 40°C, a dynamic strain of 5%, and a frequency of 15 Hz.
The low heat build-up index of the vulcanized rubber composition was expressed as an index, taking the tan δ value of Comparative Example 1 (an example containing no compound represented by Formula (1)) as 100, and the low heat build-up index was calculated based on the following equation.
Examples 1 and 2 are examples containing the compound represented by Formula (1).
A lower low heat build-up index value indicates lower heat build-up and less hysteresis loss of the vulcanized rubber composition.

Equation: Low heat build-up index
= (tan δ value of vulcanized rubber composition of Example 1 or 2)
/(tan δ value of vulcanized rubber composition of Comparative Example 1) × 100

Table 1 shows the results of the tear strength index and the low heat build-up index.

Table 1

| Table 1 | | | |
|---|---|---|---|
| | Example 1 | Example 2 | Comparative Example 1 |
| | [1] Formulation for production (parts by mass) | | |
| Step (1) | | | |
| Natural rubber*1 | 100 | 100 | 100 |

(continued)

| Table 1 | | | |
|---|---|---|---|
| | Example 1 | Example 2 | Comparative Example 1 |
| | [1] Formulation for production (parts by mass) | | |
| Step (1) | | | |
| Compound A represented by Formula (1)*6 | **1** | | - |
| Compound B represented by Formula (1)*7 | | **1** | |
| Carbon black*2 | 50 | 50 | 50 |
| Antioxidant*3 | 2 | 2 | 2 |
| Wax*4 | 2 | 2 | 2 |
| Zinc oxide | 3 | 3 | 3 |
| Stearic acid | 2 | 2 | 2 |
| Step (2) | | | |
| Vulcanization accelerator*5 | 1.2 | 1.2 | 1.2 |
| Sulfur | 2 | 2 | 2 |
| | [2] Evaluation test results (vulcanized rubber composition) | | |
| Tear strength index | **153** | **164** | 100 |
| Lower heat build-up index | **75** | **83** | 100 |

*1: natural rubber TSR-20
*2: carbon black, N234 grade
*3: antioxidant, N-phenyl-N'-(1,3-dimethylbutyl)-p-phenylenediamine
*4: wax, Antilux 111, available from Rhein Chemie Rheinau
*5: vulcanization accelerator, N-cyclohexyl-2-benzothiazolylsulfenamide (CBS)
*6: compound A, 3-amino-5-pyrazolone
*7: compound B, 3-dodecylideneamino-5-pyrazolone

[3] Explanation of Evaluation Test Results

[3-1] Tear Strength

The rubber compositions of Examples 1 and 2, each of which contains the compound represented by Formula (1), have higher tear strength than the rubber composition of Comparative

Example 1 (conventional technique).

The rubber composition of the present invention can be evaluated as exhibiting a higher tear strength index value of the vulcanized rubber composition, indicating improved tear strength of the vulcanized rubber composition.

[4-2] Low Heat Build-up

The rubber compositions of Examples 1 and 2, each of which contains the compound represented by Formula (1), have lower heat build-up than the rubber composition of Comparative Example 1 (conventional technique).
The rubber composition of the present invention can be evaluated as exhibiting a lower heat build-up index of the vulcanized rubber composition, indicating reduced low heat build-up of the vulcanized rubber composition.

Industrial Applicability

By being blended with a combination of the rubber component and the specific pyrazolone-based compound, the rubber composition of the present invention can achieve superior tear strength and low heat build-up in vulcanized rubber.

Such a rubber composition exhibits improved tear strength after vulcanization, and a tire produced using the rubber composition exhibits improved fuel efficiency.

## Claims

1. A rubber composition comprising:

a rubber component; and
a compound represented by Formula (1) and/or a salt thereof:

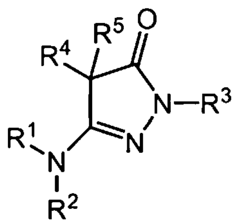

(1)

,

Wherein
$R^1$ and $R^2$ are the same or different, and each represents a hydrogen atom, an alkyl group, an aralkyl group, an aryl group, or an acyl group; or $R^1$ and $R^2$ together represent an alkylene group or an alkylidene group,
$R^3$ represents a hydrogen atom, an alkyl group, or an aryl group,
$R^4$ and $R^5$ are the same or different, and each represents a hydrogen atom or an alkyl group; or $R^4$ and $R^5$ together represent an alkylene group or an alkylidene group, and
each of these groups may have one or more substituents.

2. The rubber composition according to claim 1,
wherein, in the compound represented by Formula (1),

$R^1$ and $R^2$ are the same or different, and each represents a hydrogen atom, an alkyl group, an aryl group, or an acyl group; or $R^1$ and $R^2$ together represent an alkylidene group,
$R^3$ represents a hydrogen atom, an alkyl group, or an aryl group, and
$R^4$ and $R^5$ are the same or different, and each represents a hydrogen atom or an alkyl group; or $R^4$ and $R^5$ together represent an alkylidene group.

3. The rubber composition according to claim 1,
wherein, in the compound represented by Formula (1),

$R^1$ and $R^2$ are the same or different, and each represents a hydrogen atom, an alkyl group, or an aryl group; or $R^1$ and $R^2$ together represent an alkylidene group,
$R^3$ represents a hydrogen atom, an alkyl group, or an aryl group, and
$R^4$ and $R^5$ are the same or different, and each represents a hydrogen atom or an alkyl group; or $R^4$ and $R^5$ together represent an alkylidene group.

4. The rubber composition according to claim 1,
wherein the compound represented by Formula (1) and/or a salt thereof is at least one compound and/or a salt thereof selected from the group consisting of 3-amino-5-pyrazolone, 3-isopropylamino-5-pyrazolone, 3-phenylamino-5-pyrazolone, 3-acetylamino-5-pyrazolone, 3-dodecylideneamino-5-pyrazolone, 3-amino-1-methyl-5-pyrazolone, 3-amino-1-phenyl-5-pyrazolone, 3-amino-4-methyl-5-pyrazolone, 3-amino-4-phenylalkylidene-5-pyrazolone, and salts thereof.

5. The rubber composition according to claim 1,
wherein the compound represented by Formula (1) and/or a salt thereof is at least one compound and/or a salt thereof selected from the group consisting of 3-amino-5-pyrazolone, 3-isopropylamino-5-pyrazolone, 3-phenylamino-5-pyrazolone, 3-dodecylideneamino-5-pyrazolone, 3-amino-1-methyl-5-pyrazolone, 3-amino-1-phenyl-5-pyrazolone, 3-amino-4-methyl-5-pyrazolone, 3-amino-4-phenylalkylidene-5-pyrazolone, and salts thereof.

**6.** The rubber composition according to claim 1,
wherein the compound represented by Formula (1) and/or a salt thereof is at least one compound and/or a salt thereof selected from the group consisting of 3-amino-5-pyrazolone, 3-dodecylideneamino-5-pyrazolone, and salts thereof.

**7.** The rubber composition according to claim 1,
wherein the rubber component is at least one rubber component selected from the group consisting of natural rubber, isoprene rubber, styrene-butadiene copolymer rubber, and butadiene rubber.

**8.** The rubber composition according to claim 1,
wherein the rubber component is natural rubber.

**9.** The rubber composition according to claim 1,
further comprising carbon black and/or an inorganic filler.

**10.** The rubber composition according to claim 1 for use in a tire.

**11.** A tire produced using the rubber composition according to any one of claims 1 to 10.

## INTERNATIONAL SEARCH REPORT

International application No.
**PCT/JP2024/030156**

**A. CLASSIFICATION OF SUBJECT MATTER**

***C08L 21/00***(2006.01)i; ***B60C 1/00***(2006.01)i; ***C08K 3/013***(2018.01)i; ***C08K 5/3445***(2006.01)i
FI: C08L21/00; C08K5/3445; C08K3/013; B60C1/00 A; B60C1/00 B

According to International Patent Classification (IPC) or to both national classification and IPC

**B. FIELDS SEARCHED**

Minimum documentation searched (classification system followed by classification symbols)

C08L21/00; B60C1/00; C08K3/013; C08K5/3445

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 50-155549 A (DAINICHI NIPPON CABLES LTD.) 15 December 1975 (1975-12-15) claims, p. 2, lower right column, lines 2-15, example 10 | 1-2, 4, 9 |
| A | WO 2020/045575 A1 (OTSUKA CHEMICAL CO., LTD.) 05 March 2020 (2020-03-05) | 1-11 |
| A | JP 2021-134317 A (OTSUKA CHEMICAL CO., LTD.) 13 September 2021 (2021-09-13) | 1-11 |
| A | JP 2022-103983 A (OTSUKA CHEMICAL CO., LTD.) 08 July 2022 (2022-07-08) | 1-11 |
| A | JP 2023-075531 A (OTSUKA CHEMICAL CO., LTD.) 31 May 2023 (2023-05-31) | 1-11 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2024/030156**

| Patent document cited in search report | Publication date (day/month/year) | Patent family member(s) | Publication date (day/month/year) |
|---|---|---|---|
| JP 50-155549 A | 15 December 1975 | (Family: none) | |
| WO 2020/045575 A1 | 05 March 2020 | US 2022/0106463 A1<br>EP 3845591 A1<br>CN 112533991 A<br>KR 10-2021-0049718 A | |
| JP 2021-134317 A | 13 September 2021 | (Family: none) | |
| JP 2022-103983 A | 08 July 2022 | (Family: none) | |
| JP 2023-075531 A | 31 May 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020045575 A1
- JP 2021134317 A